# EUROPEAN PATENT SPECIFICATION

(11) **EP 4 246 441 B1**
(45) Date of publication and mention of the grant of the patent: **06.08.2025**
(21) Application number: 23158788.2
(22) Date of filing: 27.02.2023
(51) Int. Cl.: G06T 7/73, F25D 29/00, G06N 3/045, H04N 1/387

(54) **A REFRIGERATOR WITH A CAMERA FOR AUTOMATIC IMAGE CROPPING**
KÜHLSCHRANK MIT KAMERA ZUM AUTOMATISCHEN ABSCHNEIDEN VON BILDERN
RÉFRIGÉRATEUR AVEC CAMÉRA POUR LE RECADRAGE AUTOMATIQUE D'IMAGE

(30) Priority: 16.03.2022 TR 202203966
(43) Date of publication of application: 20.09.2023
(73) Proprietor: Arçelik Anonim Sirketi, 34445 Istanbul (TR)
(72) Inventor: BILGIN, Zeki, 34445 Istanbul (TR); ARSAN, Ismet, 34445 Istanbul (TR); AYDOGAN, Egemen, 34445 Istanbul (TR)

(56) References cited:
- CN-A- 111 723 706
- CN-A- 113 091 390
- CN-B- 102 414 717
- CN-U- 205 536 872
- CN-U- 207 231 035
- US-A- 5 978 519
- US-B2- 6 654 507

## Description

The present invention relates to a refrigerator with a camera wherein the borders of the refrigerator are determined in the image captured by the camera and the image is automatically cropped.

The present invention particularly relates to a refrigerator with a camera which marks only the relevant area to be used in the image captured by the camera and which respects the privacy of the user.

The accessibility of the consumption status and the stock management of the food stored in refrigerators by the user remotely is a necessity in todays advanced technology. To this end, the image of the shelves inside the refrigerator is captured by imaging devices such as cameras which is placed on at least the door and/or at least the body, and the user is enabled to access to the interior of the refrigerator via a mobile application, a mobile device or any display unit on the refrigerator. Receiving proper images from the imaging device is critical in enabling the user to monitor the food inside the refrigerator properly and manage said information such as food consumption. Capturing a clear image of all the shelves inside the body with a camera placed onto the door and all the food on the shelves on the door with a camera placed onto the body is difficult. In order to capture a clear image, several solutions are provided, such as using a plurality of cameras, placing cameras at different angles and using wide-angle cameras.

The most commonly used method to obtain clear images from cameras is first to detect the door closing angle and trigger the camera if the detected angle is a suitable angle. By means of a sensor, it is determined that the door relative to the body is at the angle for the camera to capture the most appropriate view, and the camera is operated at that moment. For example, by using a TOF sensor provided in the refrigerator body, the distance between the body and the door is measured at certain reference points, and then the angle value corresponding to said distance is calculated. However, such mechanisms bring additional costs to the product, and images cannot always be captured at the same angle due to the error margin of the sensors and also because the door is in motion while the image is being captured. For example, the camera can capture images when the opening angle of the door relative to the body is 40 degrees, or when the door angle is 35 degrees, 30 degrees or any other angle.

Additional problems may be caused by capturing images at different door-body angles. For example, in the images captured, the refrigerator cannot be centered and sometimes even the refrigerator casing goes out of the camera frame. In other words, the camera may capture not the inside of the refrigerator, but the outside. One of the solutions against this is to use wide-angle (fisheye) lenses. When a wide-angle lens is used, the refrigerator body always stays in the frame, no matter how much the door capture angle changes. However, when using a wide-angle lens, the environment outside the borders of the refrigerator also enters the frame. For example, it may be possible to view the image of a certain region in the kitchen. Viewing outside the borders of the refrigerator is undesirable for various reasons (privacy, etc.).

As a solution to said problem, in the state of the art, there are embodiments wherein the image is cropped so that only the refrigerator remains in the image captured by the camera. In said cropping process to be made on the image, exactly where the image will be cropped depends on the angle of capturing the image. For example, the width of an image captured when the door closing angle is 30 degrees is different from that of an image captured at 45 degrees. Therefore, the vertical border lines on the left and right sides of the refrigerator, for example, will be in different coordinates in both images. For this reason, it is necessary to determine exactly where to crop the image.

In the state-of-the-art United States of America Patent Document No. US2007076979A1, an automatic image cropping method is disclosed. According to said method, a template and a target function are defined. A score is calculated for the area to be cropped according to the target function, and if said score meets the condition required by the template, the cropping area is determined accordingly. For example, the template can be the number or the area of human faces in the image.

In another state-of-the-art United States of America Patent Document No. US10132547B2, a method for automatically cropping images captured by the cameras in the refrigerator is disclosed. In said patent, various markers are used inside the refrigerator for image cropping. The borders of the refrigerator are determined via said markers. CN205536872U discloses a refrigerator according to the preamble of claim 1. CN102414717B and CN111723706A disclose further prior art.

The aim of the present invention is the realization of a refrigerator which eliminates the need for additional mechanisms used to detect the door-body angle, wherein the door-body angle is calculated from the images captured by the camera, and the cropping process is performed by selecting the region of interest from the image at the most suitable angle determined by the manufacturer. The invention is defined by the wordings of the appended claim 1. Further embodiments are defined in the dependent claims.

The refrigerator with a camera of the present invention comprises at least one camera disposed on the door and/or the body. Said camera is triggered by a control unit after the user opens the door, preferably while closing the door, and the camera is enabled to capture images successively. The pixel data and dimensions of the captured images are processed by the control unit. For example, an image captured when the door, while closing, is at an angle of 40 degrees relative to the body offers a narrower image (with less dispersed pixels on the horizontal axis) of the interior of the refrigerator while another image captured when the door, while closing, is at an angle of 10 degrees relative to the body offers a wider image (with more dispersed pixels on the horizontal axis) of the interior of the refrigerator.

Each image, such as a photograph or a picture, is composed of pixels. By looking at the distribution of pixels and color values, edges can be obtained on the images. An edge can be considered as a digital line or marker. For example, the inner walls of the refrigerator are manufactured from white plastic. When a camera placed on the door captures an image of the body, the junction line of the body and the door on the hinge side will be composed of white pixels. Therefore, the control unit can draw a colored edge at this section. This edge is, for example, a phosphorescent green line of detectable thickness on the image. Likewise, since a kitchen wall will consist of pixels with the same color distribution, except for the refrigerator on the other side of the image, another edge in form of a vertical line can be drawn from the color change sharpness of the pixels between the kitchen wall and the refrigerator body. In the images captured by the camera, by using said edges, it is ensured that the image is enclosed in a frame consisting of edges so that only the interior of the refrigerator remains in the image.

In the refrigerator of the present invention, the control unit creates a relation between the edges drawn on the images captured by the camera and the angle of the door with the body. For example, in an embodiment of the present invention, while the door is closing, a camera on the body captures successive images of the door shelves. A vertical edge line is drawn on the right and left of the image according to the sharp color changes of the pixels on the right and left parts of the image. The position of said edge lines on the horizontal axis (X-axis) will differ in each image. For example, if the camera captures the image when the door is at 30 degrees, the vertical edges will be closer together, while if the camera captures the image when the door is at 10 degrees, the vertical edges will be drawn farther from each other. This is caused by the fact that the image captured when the door angle is low is a more diffuse (flattened) image. Accordingly, the door angle can be calculated by the control unit according to the coordinates of the vertical lines in each captured image. Said calculated angles are compared with the angles where the clearest image is captured, which are determined by the manufacturer. The angles where the clearest image is captured by the camera are the angles where the door is at 40 to 60 degrees, preferably at 45 to 50 degrees, relative to the body. The control unit selects the clearest image by comparing the calculated angles with said optimum angles in its memory. A frame is created by combining the marked vertical edges on the selected image with a lower and an upper horizontal edge. Said frame is the focal region of the image captured by the camera. The image is cropped at said focal region, and then processed and stored. Thus, only an image associated with the refrigerator is presented to the user.

In another embodiment of the present invention, in an image where the upper corner between the body and the door is visible, the upper edge of the door and the upper edge of the body are marked with edge lines according to pixels, and the angle between the door and the body is calculated by the control unit. Based on the angle calculated for each captured image, the control unit selects the image with the optimum image capture angle predetermined by the manufacturer and applies the cropping process.

In another embodiment of the present invention, a plurality of images captured by the camera are stored in the memory unit of the control unit. In the stored images, the door-body angle is calculated and the refrigerator border edges are determined and cropped. Using said stored data, the control unit predicts the angle at which the image is captured and automatically draws an edge on the newly captured image and performs the cropping process according to said edge by applying the artificial neural networks-based deep learning method. In this embodiment, a neural network-based machine learning model is trained to perform regression from the image. For this purpose, a training set is prepared to train the model and the correct angle values corresponding to said training set are noted. The model is trained on said training set and the corresponding angle values. Then, when new images are given as input to the trained model, the model estimates the angle. All images captured until the door is opened and closed are given to such a model to obtain angle information and the image with the most suitable angle value is selected.

In another embodiment of the present invention, the location of the refrigerator can be determined in the image captured by the camera by using artificial intelligence-based object recognition models. Said models generally give the position of the refrigerator in the image as the coordinates of the rectangular area that will cover the border points. Thus, among the images available, the image wherein the refrigerator is located in the desired location is selected. In addition, using the detected location information, a cropping process is performed to remove the area outside the refrigerator from the image.

By means of the present invention, the automatic cropping process is carried out such that the refrigerator always remains in the image, even if the images are captured from different angles by the cameras. In addition, the privacy of the users is respected by cropping out the parts except for the refrigerator, which show the user's house, from the images.

Moreover, energy costs in storage, transfer and data processing are reduced since the image size is reduced by cropping unnecessary parts except for the refrigerator.

The refrigerator comprises a body suitable for placing foodstuffs therein; a door which provides access into the body; at least one camera which is disposed on the body and/or door; and a control unit which triggers the camera to capture a plurality of successive images at certain intervals while the user opens or closes the door.

The refrigerator of the present invention comprises the control unit which, on each image captured by the camera, which separates the image into pixels and determines and marks at least one edge (border line) depending on the color distribution or change, which calculates the angle between the door and the body according to the marked edge, which compares the calculated angle with the angle range predetermined by the manufacturer, where the clearest image of the foodstuffs in the body and/or on the door is captured by the camera, which selects the image with said angle if the calculated angle is in said range, and which processes the image by cropping the area marked with at least one edge in the selected image.

In the refrigerator of the present invention, the camera placed on the body and/or door is triggered to first capture a plurality of successive images without calculating the door-body opening distance. Each image captured by the camera is determined and marked according to the color changes in the pixels, including the parts of the body or the door shelves where the foodstuffs are located. For example, if a camera placed on the door captures an image at an angle of 25 degrees while the door is closing, the edges of the door and the body, which are connected to each other with hinges, will appear in white plastic color in this image. Thus, the region consisting of white pixels, which is the right side border of the image captured by the camera, will be marked with a edge line. The edge line is a digital and distinguishable virtual line drawn on the image. By looking at the sharpness of the color distributions on the image, edge lines can be drawn on each side. Each image captured at different angles will be different when the door is opened or closed. Therefore, the edges drawn on each different image are located in different positions. The angle at which the image is captured by the camera is calculated by the control unit according to the position differences of said edges. If the calculated angle is within the angle range, which is predetermined by the manufacturer and ensures a clear image from the camera, said image is selected. The selected image, marked with at least one edge, is automatically cropped by the control unit so that only the marked part remains in the image.

In an embodiment of the present invention, the refrigerator comprises the control unit which draws an intersecting edge line on the upper edge of the door and the upper edge of the body, according to the color distribution in the pixels in each image taken captured by the camera and calculates the angle between these two intersecting edge lines.

In an embodiment of the present invention, the refrigerator comprises the control unit which, in each image captured by the camera, draws a vertical first edge to determine the first border on the side where the door and the body are adjacent when the door is open, which draws a second edge parallel to the first edge in the same image to determine the second vertical border according to the color distribution of the pixels to the side where the image of the body or door ends, and which calculates the body-door opening angle at which the image is captured by camera by comparing the coordinates of the first and second vertical edges on the horizontal axis from each image captured by the camera. In this embodiment, the control unit first determines the right and left borders of the image. As the camera angle changes, the location of the right and left vertical edges drawn on each image also changes. For example, the left vertical edge of an image captured by the camera when the door is at an angle of 20 degrees may be drawn on the tenth pixel from the leftmost pixel of the image, while the left vertical edge of an image captured by the camera when the door is at an angle of 40 degrees may be drawn on the twentieth pixel from the leftmost pixel of the image. Therefore, the edge lines are in different coordinates on the horizontal axis of the image.

In an embodiment of the present invention, the refrigerator comprises the control unit which determines the region of interest of the image captured by the camera which contains the foodstuffs by drawing a lower and an upper edge combining the vertical edges on the right and left sides of the image captured by the camera after drawing the vertical edges. Thus, first the vertical borders of the relevant region are determined, and then a frame is created.

In an embodiment of the present invention, the refrigerator comprises the control unit which stores the images captured by the camera with calculated body-door opening angle, which records the capture angles corresponding to said images, and estimates the door-body angle in the images newly captured by the camera according to the stored data. Thus, the control unit (control unit capable of deep learning based on artificial neural networks) can make predictions for future images using machine learning method.

In an embodiment of the present invention, the refrigerator comprises the control unit (control unit having artificial intelligence-based object recognition model) which stores the regions of interest defined by the edge lines in each different image captured by the camera as a rectangular template, which applies the region of interest templates to the images newly captured by the camera, and which selects the most suitable image overlapping with the template to perform the automatic cropping process.

By means of the present invention, a refrigerator with a camera is realized, wherein the image to be processed and cropped is captured at the most suitable angle without using any sensors, and the image is automatically cropped so that only the foodstuffs and the interior of the refrigerator are visible.

## Claims

1. A refrigerator **comprising** a body suitable for placing foodstuffs therein; a door which provides access into the body; at least one camera which is disposed on the body and/or door; and a control unit which triggers the camera to capture a plurality of successive images at certain intervals while the user opens or closes the door, **characterized by** the control unit which, on each image captured by the camera, separates the image into pixels and determines and marks at least one edge depending on the color distribution, said control unit calculates the angle between the door and the body according to the marked edge, said control unit compares the calculated angle with the angle range predetermined by the manufacturer, where the clearest image of the foodstuffs in the body and/or on the door is captured by the camera, said control unit selects the image with said angle if the calculated angle is in said range, and then processes the image by cropping the area marked with at least one edge in the selected image.

2. A refrigerator as in Claim 1, **characterized by** the control unit which draws an intersecting edge line on the upper edge of the door and the upper edge of the body, according to the color distribution in the pixels in each image taken captured by the camera, and calculates the angle between these two intersecting edge lines.

3. A refrigerator as in Claim 1 or 2, **characterized by** the control unit which, in each image captured by the camera, draws a vertical first edge to determine the first border on the side where the door and the body are adjacent when the door is open, which draws a second edge parallel to the first edge in the same image to determine the second vertical border according to the color distribution of the pixels to the side where the image of the body or door ends, and which calculates the body-door opening angle at which the image is captured by camera by comparing the coordinates of the first and second vertical edges on the horizontal axis from each image captured by the camera.

4. A refrigerator as in Claim 3, **characterized by** the control unit which determines the region of interest of the image captured by the camera which contains the foodstuffs by drawing a lower and an upper edge combining the vertical edges on the right and left sides of the image captured by the camera after drawing the vertical edges.

5. A refrigerator as in any one of the above claims, **characterized by** the control unit which stores the images captured by the camera with calculated body-door opening angle, which records the capture angles corresponding to said images, and estimates the door-body angle in the images newly captured by the camera according to the stored data.

6. A refrigerator as in claim 4, **characterized by** the control unit which stores the regions of interest defined by the edge lines in each different image captured by the camera as a rectangular template, which applies the region of interest templates to the images newly captured by the camera, and which selects the most suitable image overlapping with the template to perform the automatic cropping process.

## Patentansprüche

1. Ein Kühlschrank **umfasst** einen Körper, der geeignet ist, Lebensmittel darin zu platzieren; eine Tür, die den Zugang in den Körper ermöglicht; mindestens eine Kamera, die an dem Körper und/oder der Tür angeordnet ist; und eine Steuereinheit, die die Kamera auslöst, um eine Vielzahl von aufeinanderfolgenden Bildern in bestimmten Intervallen aufzunehmen, während der Benutzer die Tür öffnet oder schließt, **gekennzeichnet ist es dadurch,** dass die Steuereinheit bei jedem von der Kamera aufgenommenen Bild das Bild in Pixel trennt und mindestens eine Kante in Abhängigkeit von der Farbverteilung bestimmt und markiert, wobei die Steuereinheit den Winkel zwischen der Tür und dem Gehäuse entsprechend der markierten Kante berechnet, die Steuereinheit vergleicht den berechneten Winkel mit dem vom Hersteller vorgegebenen Winkelbereich, in dem das klarste Bild der Lebensmittel in der Einrichtung und/oder auf der Tür von der Kamera aufgenommen wird, die Steuereinheit wählt das Bild mit dem genannten Winkel aus, wenn der berechnete Winkel in dem genannten Bereich liegt, und verarbeitet dann das Bild, indem sie den mit mindestens einer Kante markierten Bereich in dem ausgewählten Bild ausschneidet.

2. Ein Kühlschrank, wie in Anspruch 1 aufgeführt, **ist dadurch gekennzeichnet, dass** die Steuereinheit eine sich schneidende Kantenlinie auf der oberen Kante der Tür und der oberen Kante des Gehäuses zeichnet, entsprechend der Farbverteilung in den Pixeln in jedem von der Kamera aufgenommenen Bild, und den Winkel zwischen diesen zwei sich schneidenden Kantenlinien berechnet.

3. Ein Kühlschrank, wie in Anspruch 1 oder 2 aufgeführt, **ist dadurch gekennzeichnet, dass** die Steuereinheit, die in jedem von der Kamera aufgenommenen Bild eine vertikale erste Kante zeichnet, um die erste Grenze auf der Seite zu bestimmen, an der die Tür und der Körper bei geöffneter Tür aneinandergrenzen, die eine zweite Kante parallel zur ersten Kante im selben Bild zeichnet, um die zweite vertikale Grenze gemäß der Farbverteilung der Pixel auf der Seite zu bestimmen, an der das Bild des Körpers oder der Tür endet, und die den Körper-Tür-Öffnungswinkel berechnet, bei dem das Bild von der Kamera aufgenommen wird, indem sie die Koordinaten der ersten und zweiten vertikalen Kante auf der horizontalen Achse von jedem von der Kamera aufgenommenen Bild vergleicht.

4. Ein Kühlschrank, wie in Anspruch 3 aufgeführt, **ist dadurch gekennzeichnet, dass** die Steuereinheit, die den betreffenden Bereich des von der Kamera aufgenommenen Bildes, der die Lebensmittel enthält, bestimmt, indem sie einen unteren und einen oberen Rand zeichnet, die die vertikalen Ränder auf der rechten und linken Seite des von der Kamera aufgenommenen Bildes nach dem Zeichnen der vertikalen Ränder kombinieren.

5. Ein Kühlschrank, wie in einem der vorherigen Ansprüchen aufgeführt, **ist dadurch gekennzeichnet, dass** die Steuereinheit, die die von der Kamera aufgenommenen Bilder mit dem berechneten Karosserieöffnungswinkel speichert, die den Bildern entsprechenden Aufnahmewinkel aufzeichnet und den Tür-Karosserie-Winkel in den von der Kamera neu aufgenommenen Bildern gemäß den gespeicherten Daten schätzt.

6. Ein Kühlschrank, wie in Anspruch 4 aufgeführt, **ist dadurch gekennzeichnet, dass** die Steuereinheit, die die durch die Kantenlinien definierten Bereiche von Interesse in jedem verschiedenen, von der Kamera aufgenommenen Bild als rechteckige Schablone speichert, die Schablonen der Bereiche von Interesse auf die neu von der Kamera aufgenommenen Bilder anwendet und das am besten geeignete Bild, das sich mit der Schablone überschneidet, auswählt, um den automatischen Beschneidungsprozess durchzuführen.

## Revendications

1. Un réfrigérateur **comprenant** un corps adapté pour y placer des denrées alimentaires; une porte qui permet l'accès au corps; au moins une caméra qui est disposée sur le corps et/ou la porte; et une unité de commande qui déclenche la caméra pour capturer une pluralité d'images successives à intervalles réguliers pendant que l'utilisateur ouvre ou ferme la porte, **caractérisé par** l'unité de commande qui, pour chaque image capturée par la caméra, sépare l'image en pixels et détermine et marque au moins un bord en fonction de la distribution des couleurs, ladite unité de commande calcule l'angle entre la porte et le corps en fonction du bord marqué, ladite unité de commande compare l'angle calculé avec la plage d'angles prédéfinie par le fabricant, où l'image la plus nette des denrées alimentaires dans le corps et/ou sur la porte est capturée par la caméra, ladite unité de commande sélectionne l'image avec ledit angle si l'angle calculé est dans ladite plage, puis traite l'image en recadrant la zone marquée avec au moins un bord sur l'image sélectionnée.

2. Un réfrigérateur selon la Revendication 1, **caractérisé par** l'unité de commande qui trace une ligne de bord en intersection sur le bord supérieur de la porte et le bord supérieur du corps, en fonction de la distribution des couleurs dans les pixels de chaque image capturée par la caméra, et calcule l'angle entre ces deux lignes de bord intersectantes.

3. Un réfrigérateur selon la Revendication 1 ou 2, **caractérisé par** l'unité de commande qui, pour chaque image capturée par la caméra, trace un premier bord vertical pour déterminer la première bordure sur le côté où la porte et le corps sont adjacents lorsque la porte est ouverte, qui trace un second bord parallèle au premier bord dans la même image pour déterminer la seconde bordure verticale en fonction de la distribution des couleurs des pixels du côté où l'image du corps ou de la porte se termine, et qui calcule l'angle d'ouverture entre la porte et le corps correspondant au moment où l'image est capturée par la caméra en comparant les coordonnées du premier et du second bord vertical sur l'axe horizontal à partir de chaque image capturée par la caméra.

4. Un réfrigérateur selon la Revendication 3, **caractérisé par** l'unité de commande qui détermine la région d'intérêt de l'image capturée par la caméra qui contient les denrées alimentaires en traçant un bord inférieur et un bord supérieur en combinant les bords verticaux sur les côtés droit et gauche de l'image capturée par la caméra après avoir tracé les bords verticaux.

5. Un réfrigérateur selon l'une quelconque des revendications précédentes, **caractérisé par** l'unité de commande qui stocke les images capturées par la caméra avec un angle d'ouverture entre la porte et le corps calculé, qui enregistre les angles de capture correspondant auxdites images et qui estime l'angle entre la porte et le corps dans les images nouvellement capturées par la caméra en fonction des données stockées.

6. Un réfrigérateur selon l'une quelconque des revendications précédentes, **caractérisé par** l'unité de commande qui stocke les régions d'intérêt définies par les lignes de bord dans chaque image différente capturée par la caméra en tant que modèle rectangulaire, qui applique les modèles de région d'intérêt aux images nouvellement capturées par la caméra, et qui sélectionne l'image la plus appropriée chevauchant le modèle pour effectuer le processus de recadrage automatique.
